# EUROPÄISCHE PATENTSCHRIFT

(11) **EP 2 170 655 B1**
(45) Veröffentlichungstag und Bekanntmachung des Hinweises auf die Patenterteilung: **23.01.2013**
(21) Anmeldenummer: 08785912.0
(22) Anmeldetag: 03.07.2008
(51) Int. Cl.: B60R 25/02

(54) **ANSTEUERVERFAHREN UND ANSTEUERSCHALTUNG FÜR EINEN MOTORANTRIEB EINER ELEKTRONISCHEN LENKUNGSVERRIEGELUNG**
CONTROL METHOD AND CONTROL CIRCUIT FOR A MOTOR DRIVE OF AN ELECTRONIC STEERING LOCK
PROCÉDÉ DE COMMANDE ET CIRCUIT DE COMMANDE POUR UN ENTRAÎNEMENT MOTORISÉ D'UN VERROUILLAGE DE DIRECTION ÉLECTRONIQUE

(30) Priorität: 16.07.2007 DE 102007033367
(43) Veröffentlichungstag der Anmeldung: 07.04.2010
(73) Patentinhaber: Huf Hülsbeck & Fürst GmbH & Co. KG, 42551 Velbert (DE)
(72) Erfinder: VAN DEN BOOM, Andreas, 45309 Essen (DE); HANSEN-RÜTHER, Dirk, 58256 Ennepetal (DE); GORNIK, Christian, 45549 Sprockhövel (DE); ZECH, Michael, 42553 Velbert (DE)
(74) Vertreter: Zenz
(86) Internationale Anmeldenummer: PCT/EP2008/058590
(87) Internationale Veröffentlichungsnummer: WO 2009/010397

(56) Entgegenhaltungen:
- DE-A1- 3 344 382
- US-A1- 2001 020 835
- US-A1- 2004 239 185

## Beschreibung

Die Erfindung betrifft ein Verfahren zum Ansteuern eines Motorantriebs einer ELV, bei der ein Antriebsmotor über wenigstens ein Leistungsschaltbauelement derart mit einer Spannungsversorgung gekoppelt ist, das ein Einschalten des Leistungsschaltbauelements zu einem Stromfluss durch den Antriebsmotor führt. Ferner betrifft die Erfindung eine Ansteuerschaltung für einen Motorantrieb einer ELV mit wenigstens einem Leistungsschaltbauelement, das zwischen einer Spannungsversorgung und einem Antriebsmotor eingekoppelt ist, wobei ein Einschalten des Leistungsschaltbauelements zu einem Stromfluss durch den Antriebsmotor führt, und mit einem Controller mit wenigstens einem Steuerausgang zum Ansteuern des Leistungsschaltbauelements, wobei wenigstens ein Eingang des Controllers mit wenigstens einem Sensor zum Erfassen einer Position eines bewegten Bauteils eines Getriebes der ELV gekoppelt ist.

Elektronische Lenkungsverriegelungen (ELV), auch Lenkradsperren genannt, werden in Kraftfahrzeugen eingesetzt, um bei stehendem Fahrzeug unter bestimmten Bedingungen die Lenksäule mechanisch derart zu blockieren, dass ein Verdrehen und Lenken verhindert wird. Elektronische Lenkungsverriegelungen sind beispielsweise Teil einer Wegfahrsperre. Das Verdrehen der Lenksäule wird beispielsweise blockiert, indem ein Sperrriegel oder Sperrbolzen in radialer Richtung in eine entsprechende Ausnehmung (Nut) der Lenksäule hineingefahren wird. Der in die Lenksäule eingreifende Sperrbolzen ist derart feststehend montiert, dass ein gewaltsames Verdrehen der Lenksäule weitgehend vermieden wird. Die auf die Lenksäule einwirkenden Kräfte können sich auf die im Eingriff befindlichen Flächen des Sperrbolzens übertragen, so dass ein Bewegen des Sperrbolzens, insbesondere ein Herausziehen des Sperrbolzens, erschwert wird und einen relativ hohen Kraftaufwand erfordert.

Die Bewegung des Sperrbolzens, d. h. das Hineinschieben in die Ausnehmung der Lenksäule bzw. das Herausziehen des Sperrbolzens in eine Entriegelungsstellung, wird von einem Getriebe gesteuert, das wiederum von einem Elektromotor angetrieben wird. Das Getriebe und der Elektromotor sind so zu dimensionieren, dass sie auch die beim Herausziehen des Sperrbolzens aufzubringenden Kräfte erzeugen können. Die Motorleistung bzw. die Getriebeübersetzung sind entsprechend hoch zu wählen. Die hohen Motorleistungen werden bei bekannten elektronischen Lenkradverriegelungen auch dann aufgebracht, wenn sich der Sperrbolzen relativ leicht bewegen lässt. Üblicherweise wird der Motor nämlich stets zwischen der vollen Betriebsspannung und Masse eingeschaltet, aber keine Steuerung der Motorleistung vorgenommen. Die den Motor ansteuernden Schalteinrichtungen erlauben regelmäßig nur zwei Zustände, Ein und Aus, nicht aber eine Regelung des fließenden Stroms. Dies führt zu einem häufig unerwünscht hohen Energieverbrauch und zu störenden Geräuschen aufgrund der Bewegung des Motors und des Getriebes. Aus DE334 4 382 A1 ist ein nach dem Stand der Technik Verfahren zum Ansteuern eines Motorantriebs einer ELV bekannt.

Aufgabe der Erfindung ist es, die genannten Nachteile zu vermindern, insbesondere die Motorleistung und die störenden Geräusche soweit möglich zu reduzieren.

Diese Aufgabe wird erfindungsgemäß durch ein Verfahren mit den Merkmalen des Anspruchs 1 bzw. eine Ansteuerschaltung mit den Merkmalen des Anspruchs 12 gelöst.

Bei dem erfindungsgemäßen Verfahren zum Ansteuern eines Motorantriebs einer ELV, bei der ein Antriebsmotor über wenigstens ein Leistungsschaltbauelement derart mit einer Spannungsversorgung gekoppelt ist, dass ein Einschalten des Leistungsschaltbauelements zu einem Stromfluss durch den Antriebsmotor führt, wird das Leistungsschaltbauelement mit einer Folge von Impulsen mit einer vorgegebenen Frequenz und einem vorgegebenen Tastverhältnis angesteuert. Das Tastverhältnis wird in Abhängigkeit von wenigstens einem Parameter des Bewegungsablaufs der mit dem Antriebsmotor angetriebenen Bewegung eines Getriebes der ELV geändert. Die Frequenz der Impulse ist dabei so hoch gewählt, dass es (bei konstantem Tastverhältnis) nicht zu ungleichmäßigen Bewegungen des Motors bzw. einem Schwingen der Motorbewegung kommt. Durch die Energiespeicherung (kinetische Energie der sich bewegenden Teile sowie Energie des Magnetfeldes) kommt es praktisch zu einer "Glättung" des Bewegungsablaufs. Die Erfindung basiert auf zwei wesentlichen Grundgedanken: Einerseits wird die dem Motor zugeführte Energie von dem vorgegebenen Tastverhältnis gesteuert; andererseits wird das Tastverhältnis wiederum in Abhängigkeit von wenigstem einem Parameter des Bewegungsablaufs des Getriebes der ELV geändert. Das Tastverhältnis wird somit während des Bewegens des Sperrbolzens variiert. Somit kann die dem Motor zugeführte Energie in Abhängigkeit von einer erreichten Position und/oder in Abhängigkeit von einem in einer bestimmten Bewegungsphase zu erzielenden Drehmoment geändert werden.

Bei einer Ausführungsform ist einer der Parameter die Stellung (Position) eines bewegten Getriebebauteils. Bei dem Getriebebauteil kann es sich auch um den Sperrbolzen selbst oder ein den Sperrbolzen betätigendes Steuerglied handeln. Zum Erfassen der Stellung des bewegten Getriebebauteils dient ein Sensor oder dienen mehrere Sensoren, wobei es sich bei den Sensoren beispielsweise um Positionssensoren (z. B. Mikrotaster oder Magnet-Hallelement-Kombinationen) oder um Wegsensoren handelt. Das Tastverhältnis wird nun in Abhängigkeit von der erfassten Stellung geändert; beispielsweise wird der Motor dann, wenn sich das Getriebebauteil in einer Stellung befindet, bei der der Sperrbolzen in die Lenksäule eingreift oder eingreifen kann, mit einem maximalen Tastverhältnis angesteuert und das Tastverhältnis anschließend, wenn sich der Sperrbolzen nicht mehr im Eingriff mit der Lenksäule befindet, auf einen Wert abgesenkt, der zu einer Motorleistung führt, die für die Bewegung des Sperrbolzens im unbelasteten Zustand ausreicht. Bei einer bevorzugten Ausführungsform kann das Tastverhältnis zusätzlich noch in Abhängigkeit von der Bewegungsrichtung auf dem Fahrweg des Sperrbolzens geändert werden. Das bedeutet, dass beispielsweise beim Herausziehen des Sperrbolzens (Entriegeln) eine höhere Motorleistung durch ein größeres Tastverhältnis angesteuert werden könnte als bei dem Bewegen des Sperrbolzens in Richtung der Lenksäule (Verriegeln).

Bei einer weiteren Ausführungsform kann beispielsweise alternativ oder zusätzlich einer der das Tastverhältnis bestimmenden Parameter des Bewegungsablaufs ein während der Bewegung zu erzielendes Drehmoment sein, so dass das Tastverhältnis in Abhängigkeit von dem zu erzielenden Drehmoment geändert wird. Beispielsweise könnte zu Beginn eines Entriegelungsvorgangs zunächst eine Verringerung bzw. Begrenzung eines Anfangsdrehmoments durch ein geringeres Tastverhältnis angesteuert werden, wobei das verringerte Drehmoment so bemessen ist, dass es nicht ausreicht, den Sperrbolzen aus der Lenksäule herauszuziehen, sofern sich diese in einer ungünstigen Stellung befindet. Ein Sensor würde dann zunächst feststellen, dass sich der Sperrbolzen trotz der Motoransteuerung nicht bewegt. Aus dieser Information könnte dann eine Steuereinrichtung ein Signal an den Fahrer erzeugen, dass diesem mitteilt, dass er das Lenkrad (hin und her) bewegen soll, um die Verspannung des Sperrbolzens aufzuheben. Beim Bewegen des Lenkrads könnte dann ggf. auch ein Beginn der Bewegung des Sperrbolzens erfasst werden. Sofern dann innerhalb einer vorgegebenen Zeitdauer keine Bewegung des Sperrbolzen von den Sensoren festgestellt wird, so könnte die Steuereinrichtung das Drehmoment durch Erhöhen des Tastverhältnisses wieder steigern. Eine solche Vorgehensweise könnte Energie sparen und Geräusche mindern.

Bei einer bevorzugten Ausführungsform des erfindungsgemäßen Verfahrens liegt die vorgegebene Frequenz der Impulsfolge zwischen 0,1 kHz und 100 kHz, vorzugsweise zwischen 4 kHz und 20 kHz. Bei den üblicherweise für elektronische Lenkungsverriegelungen verwendeten Motoren und Dimensionen ergibt sich bei dieser Frequenz eine gute Glättung des Bewegungsablaufs.

Die Folge von Impulsen wird vorzugsweise von einer Steuerschaltung (beispielsweise einem Mikrocontroller) erzeugt. Bei einer bevorzugten Weiterbildung wird das Tastverhältnis zusätzlich in Abhängigkeit von einer von der Steuerschaltung erfassten Betriebsspannung und/oder in Abhängigkeit von einem eine Temperatur der elektronischen Lenkungsverriegelung anzeigenden, in der Steuerschaltung gespeicherten Wert eingestellt. Die Steuerschaltung (der Mikrocontroller) speichert beispielsweise Daten, die einen funktionalen Zusammenhang zwischen der Betriebsspannung, der Temperatur, der Stellung eines Getriebebauteils und dem gewünschten Drehmoment einerseits und dem einzustellenden Tastverhältnis andererseits widerspiegeln. Das Tastverhältnis wird dann in Abhängigkeit von der hinterlegten funktionalen Abhängigkeit und den erfassten Größen Spannung, Temperatur und Stellung von der Steuerschaltung eingestellt. Die in der Steuerschaltung hinterlegten funktionalen Zusammenhänge berücksichtigen vorgegebene Ziele, wie beispielsweise maximale Energieeinsparung oder Geräuschminderung.

Die erfindungsgemäße Ansteuerschaltung für einen Motorantrieb einer ELV weist wenigstens ein Leistungsschaltbauelement auf, das zwischen einer Spannungsversorgung und einem Antriebsmotor eingekoppelt ist, wobei ein Einschalten des Leistungsschaltbauelements zu einem Stromfluss durch den Antriebsmotor führt. Sie weist ferner einen Controller mit wenigstens einem Steuereingang auf, der das Leistungsschaltbauelement mit einer Folge von Impulsen mit einer vorgegebenen Frequenz und mit einem vorgegebenen Tastverhältnis ansteuert, wobei wenigstens ein Eingang des Controllers mit wenigstens einem Sensor zum Erfassen einer Position eines bewegten Bauteils des Getriebes der ELV gekoppelt ist und wobei der Controller das Tastverhältnis in Abhängigkeit von wenigstens einem Parameter des Bewegungsablaufs der mit dem Antriebsmotor angetriebenen Bewegung des Getriebes ändert. Vorzugsweise ist einer der Parameter die von dem Sensor erfasste Position des Getriebes auf dem Fahrweg zwischen einer Verriegelungsstellung und einer Entriegelungsstellung. Ein anderer oder zusätzlicher Parameter kann ein während der Bewegung des Getriebes zu erzielendes Drehmoment sein. Das Tastverhältnis kann darüber hinaus in Abhängigkeit von der Bewegungsrichtung auf dem Fahrweg geändert werden. Beispielsweise stellt der Controller das Tastverhältnis zu Beginn des Entriegelns auf ein maximales Tastverhältnis von beispielsweise 100% ein.

Vorteilhafte und/oder bevorzugte Weiterbildungen der Erfindung sind in den Unteransprüchen gekennzeichnet. Im folgenden wird die Erfindung anhand eines in den Zeichnungen dargestellten bevorzugten Ausführungsbeispiels näher erläutert. In den Zeichnungen zeigen:
Figur 1 eine schematisches Blockschaltbild einer erfindungsgemäßen Ansteuerschaltung; und
Figuren 2A und 2B zeitliche Verläufe eines ein Leistungsschaltbauelement der erfindungsgemäßen Ansteuerschaltung ansteuernden Signals mit verschiedenen Tastverhältnissen.

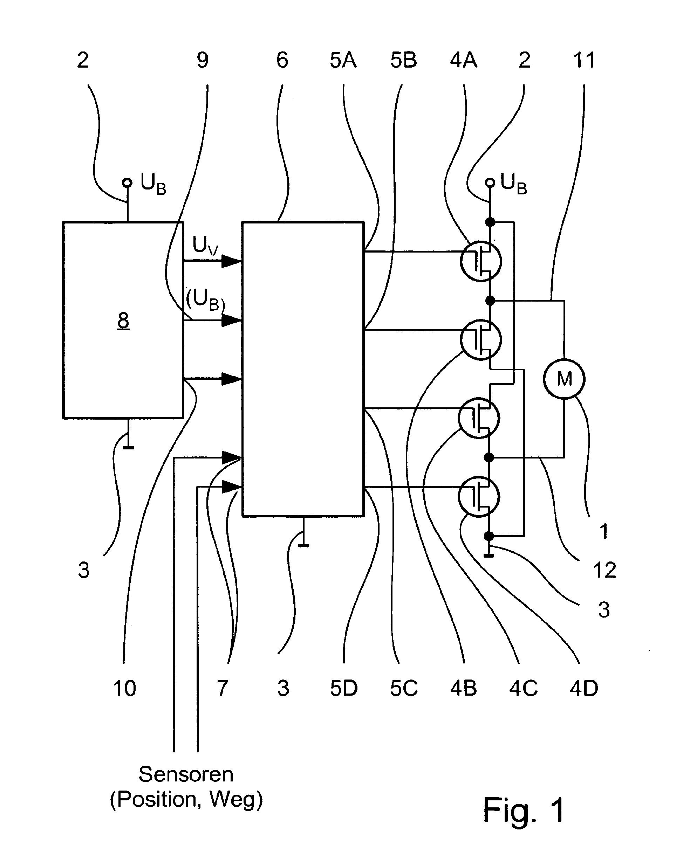

Figur 1 zeigt eine schematische Darstellung eines Teils einer Ansteuerschaltung für eine elektronische Lenkungsverriegelung (ELV), insbesondere für den Motorantrieb der ELV. Ein Motor 1, der das Getriebe zum Bewegen des Sperrbolzens für einen Eingriff in eine Lenkradsäule antreibt, ist über Leistungsschaltbauelemente zwischen einer Spannungsversorgung 2 und Masse 3 eingekoppelt. An der Spannungsversorgung wird die Betriebsspannung U_{B} zur Verfügung gestellt. Bei dem in Figur 1 schematisch dargestellten Ausführungsbeispiel können beide Anschlüsse des Motors 1 entweder mit der Spannungsversorgung 2 oder mit Masse 3 gekoppelt werden, so dass der Motor in beiden Richtungen bewegt werden kann. Es sind auch elektronische Lenkungsverriegelungen bekannt, bei denen der Motor stets nur in einer Richtung bewegt zu werden braucht. Bei einer solchen Anordnung kann ein Teil der in Figur 1 gezeigten Leistungsschaltbauelemente entfallen. Wenn sich der Motor 1 nicht bewegen soll, werden beide Anschlüsse des Motors zur Sicherheit vorzugsweise mit Masse 3 gekoppelt, d. h. es wird dafür gesorgt, dass die beiden Leistungsschaltbauelemente, die die Motoranschlüsse mit Masse 3 koppeln, eingeschaltet bleiben. Es ist auch denkbar, in diesem Fall beide Motoranschlüsse mit der Spannungsversorgung 2 zu koppeln, indem die Leistungsschaltbauelemente, die den Motor 1 mit der Spannungsversorgung 2 koppeln, eingeschaltet bleiben.

Die Leistungsschaltbauelemente 4A bis 4D können beliebige elektro-mechanische oder elektronische Schaltelemente umfassen, wie beispielsweise Relais, bipolare Leistungsschalttransistoren, Thyristoren, Triacs oder - wie in Figur 1 skizziert - Leistungsfeldeffekttransistoren (FET). Leistungs-FETs haben den Vorteil, dass sie sich (nahezu) leistungslos (stromlos) ansteuern lassen. Bei der in Figur 1 dargestellten Ausführungsform ist ein erster Motoranschluss 11 über einen ersten Leistungs-FET 4A mit der Spannungsversorgung 2 und über einen zweiten Leistungs-FET 4B mit Masse 3 gekoppelt. Ein zweiter Anschluss 12 des Motors 1 ist über einen dritten Leistungs-FET 4C mit der Spannungsversorgung 2 und einen vierten Leistungs-FET 4D mit Masse 3 gekoppelt. Um den Motor 1 in eine erste Richtung anzutreiben, werden die Leistungs-FETs 4A und 4D eingeschaltet, während die beiden verbleibenden Leistungs-FETs 4B und 4C ausgeschaltet sind. Um den Motor in die entgegengesetzte Richtung anzutreiben, werden die Leistungs-FETs 4B und 4C eingeschaltet, während die Leistungs-FETs 4A und 4D ausgeschaltet bleiben. Im Ruhezustand sind vorzugsweise die Leistungs-FETs 4B und 4D eingeschaltet, um beide Anschlüsse 11, 12 des Motors 1 mit Masse 3 zu koppeln.

Die vier Leistungs-FETs 4A bis 4D werden von vier Steuerausgängen 5A bis 5D eines Mikrocontrollers 6 angesteuert. Der Mikrocontroller 6 enthält üblicherweise einen Mikroprozessor, Speicherbauelemente zum Speichern einer Firmware und eine Reihe von Eingabe- und Ausgabeschaltungen für digitale und analoge Eingangs- bzw. Ausgangssignale. Die Eingabeschaltungen für analoge Eingangssignale enthalten Analog-Digital-Umsetzer und die Ausgabeschaltungen für analoge Signale enthalten Digital-Analog-Umsetzer. Die vier Ausgangsanschlüsse 5A bis 5D zum Ansteuern der Leistungs-FETs 4A bis 4D können die Ausgänge digitaler Ausgabeschaltungen sein.

Der Mikrocontroller 6 enthält ferner Eingangsanschlüsse 7, die mit (nicht in Figur 1 gezeigten) Sensoren zum Erfassen von Positionen und Wegen eines mit dem Sperrbolzen der elektronischen Lenkungsverriegelung gekoppelten Getriebes verbunden sind. Die Sensoren zum Erfassen vorgegebener Positionen können beispielsweise Mikrotaster oder Hall-Sensoren sein, die eine Annäherung von mit einem Getriebebauteil gekoppelten Permanentmagneten erfassen können.

Der Controller 6 ist ferner mit einer Spannungsversorgungsschaltung 8 verbunden, die zwischen der Betriebsspannung U_{B} und Masse eingekoppelt ist. Die Spannungsversorgungsschaltung 8 stellt zunächst die Versorgungsspannung Uᵥ für den Mikrocontroller 6 zur Verfügung. Darüber hinaus erfasst die Spannungsversorgungsschaltung 8 die anliegende Betriebsspannung und stellt dem Mikrocontroller über eine Signalleitung 9 ein die Betriebsspannung anzeigendes oder kennzeichnendes Signal zur Verfügung. Bei einer bevorzugten Ausführungsform stellt die Spannungsversorgungsschaltung 8 darüber hinaus ein die Temperatur v anzeigendes Signal auf einer weiteren Signalleitung 10 zur Verfügung.

Der Mikrocontroller 6 erzeugt die Steuersignale an den Ausgangsanschlüssen 5A bis 5D in Abhängigkeit von den an den Eingangsanschlüssen 7 anliegenden Sensorsignalen, dem auf Leitung 9 anliegenden, die Betriebsspannung anzeigenden Signal sowie dem auf Leitung 10 anliegenden, die Temperatur anzeigenden Signal. Die funktionale Abhängigkeit zwischen diesen und ggf. weiteren Eingangssignalen und den zu erzeugenden Ausgangssignalen ist in der Firmware des Mikrocontrollers, d. h. in Programmen und Parameter-Daten, hinterlegt. Anstelle eines programmgesteuert arbeitenden Mikrocontrollers 6 könnte auch eine andere die funktionale Abhängigkeit widerspiegelnde Steuerschaltung, beispielsweise ein FPGA, verwendet werden.

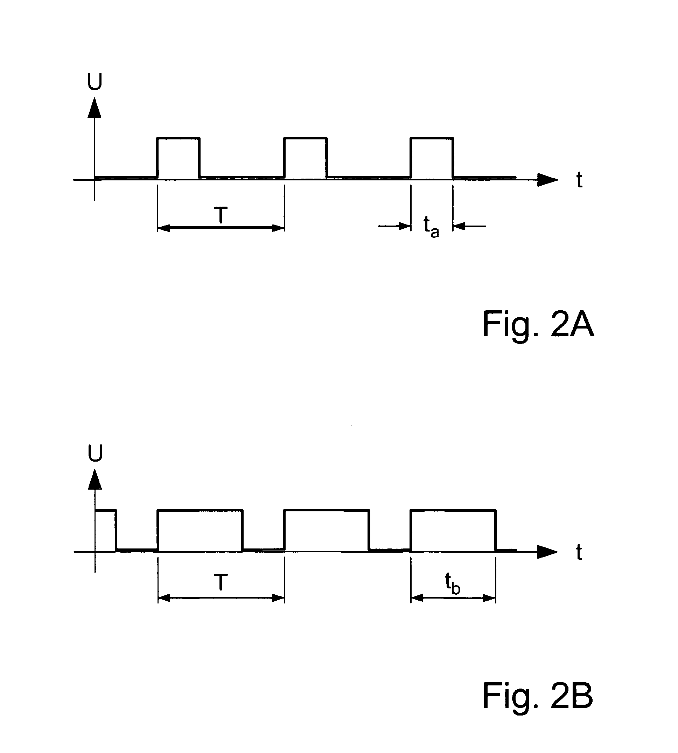

Zum Antreiben des Motors 1 in einer ersten vorgegebenen Richtung werden beispielsweise die Leistungs-FETs 4A und 4D eingeschaltet, während die Leistungs-FETs 4B und 4C ausgeschaltet bleiben. Dabei wird entweder einer der Leistungs-FET 4A allein oder werden beiden Leistungs-FETs 4A und 4D gleichzeitig mit einer Impulsfolge angesteuert, wie sie beispielsweise in den Figuren 2A und 2B skizziert ist. Bevorzugt ist eine Ansteuerung nur des "Low-Side-Leistungs-FET" (des auf der Masse-Seite angeordneten FET), da dieser ein schnelleres Schalten gestattet. Die Figuren 2A und 2B zeigen ein Rechteck-Impuls-Signal, wie es beispielsweise von einer digitalen Ausgabeschaltung des Mikrocontrollers an den Ausgängen 5A bis 5D ausgegeben werden kann. Das Signal hat eine Periodendauer T, wobei es bei dem Beispiel gemäß Figur 2A innerhalb der Periodendauer T jeweils für eine Zeitdauer tₐ eingeschaltet ist. Bei dem Beispiel gemäß Figur 2B ist es während der Periodendauer T jeweils für eine Zeitdauer t_{b} eingeschaltet. Daraus ergibt sich bei Figur 2A ein Tastverhältnis von tₐ/T und bei dem Beispiel gemäß Figur 2B ein Tastverhältnis von t_{b}/T. Das Tastverhältnis beträgt bei Figur 2A etwa 33% und bei Figur 2B etwa 67%. Bei dem höheren Tastverhältnis gemäß Figur 2B wird der Motor mit einer höheren Leistung angesteuert, was ein größeres Drehmoment gestattet. Die Periodendauer T entspricht einer Frequenz, die zwischen 4 kHz und 20 kHz liegt.

Das jeweils von dem Mikrocontroller 6 erzeugt Tastverhältnis hängt von der erfassten Betriebsspannung U_{B}, der erfassten Temperatur und den Sensorausgangssignalen sowie von der Zeit ab. Damit der Mikrocontroller 6 ein zeitabhängiges Tastverhältnis einstellen kann, ist er vorzugsweise mit einer Uhr (Timer) oder einem Zähler gekoppelt. Bei weniger aufwändigen Ausführungsformen kann auch eine Abhängigkeit von der Betriebsspannung und/oder der Temperatur entfallen.

Der Mikrocontroller 6 fragt programmgesteuert die Eingangssignale auf den Leitungen 9 und 10 sowie an den Eingangsanschlüssen 7 ab und steuert in Abhängigkeit von den Eingangssignalen sowie von weiteren Eingangssignalen, die beispielsweise den Wunsch zum Entriegeln oder Verriegeln anzeigen, die Ausgangssignale an den Anschlüssen 5A bis 5D und insbesondere das Tastverhältnis der dort ausgegebenen Impulsfolgen. Dabei werden beispielsweise folgende Abhängigkeiten berücksichtigt. Bei einer höheren Betriebsspannung U_{B} wird beispielsweise das Tastverhältnis abgesenkt, um somit trotz der höheren Betriebsspannung eine etwa gleiche Ansteuerleistung zu erzielen. Ferner wird beispielsweise beim Entriegelungsvorgang zunächst mit einem geringen Tastverhältnis begonnen, wobei dann, wenn ein Sensor anzeigt, dass sich der Sperrbolzen nicht bewegt, das Tastverhältnis schrittweise erhöht wird. Bei einer anderen Ausführungsform kann der Entriegelungsvorgang auch mit einem maximalen Tastverhältnis begonnen werden, wobei das Tastverhältnis beim Erreichen einer Position, die das vollständige Herausfahren des Sperrbolzens aus der Nut der Lenksäule anzeigt, abgesenkt werden kann. Darüber hinaus ist es denkbar, dass verschiedene Positionen auf dem Weg zwischen der Verriegelungsstellung und der Entriegelungsstellung erfasst werden und das Tastverhältnis jeweils beim Erreichen der Position neu eingestellt wird. Auch eine kontinuierliche Änderung des Tastverhältnisses entlang des Weges ist denkbar.

## Patentansprüche

1. Verfahren zum Ansteuern eines Motorantriebs einer Elektronischen Lenkungsverriegelung (ELV), bei der ein Antriebsmotor (1) über wenigstens ein Leistungsschaltbauelement (4A - 4D) derart mit einer Spannungsversorgung (2, 3) gekoppelt ist, dass ein Einschalten des Leistungsschaltbauelements zu einem Stromfluß durch den Antriebsmotors führt,
wobei das Leistungsschaltbauelement (4A - 4D) mit einer Folge von Impulsen mit einer vorgegebenen Frequenz und mit einem vorgegebenen Tastverhältnis angesteuert wird,
wobei das Tastverhältnis in Abhängigkeit von wenigstens einem Parameter des Bewegungsablaufs der mit dem Antriebsmotor angetriebenen Bewegung eines Getriebes der ELV geändert wird.

2. Verfahren zum Ansteuern eines Motorantriebs einer ELV nach Anspruch 1, **dadurch gekennzeichnet, dass** ein Parameter die Stellung eines bewegten Getriebebauteils ist.

3. Verfahren zum Ansteuern eines Motorantriebs einer ELV nach Anspruch 2, **dadurch gekennzeichnet, dass** das Tastverhältnis in Abhängigkeit von der Position des Getriebes auf dem Fahrweg zwischen einer Verriegelungsstellung und einer Entriegelungsstellung geändert wird.

4. Verfahren zum Ansteuern eines Motorantriebs einer ELV nach Anspruch 3, **dadurch gekennzeichnet, dass** das Tastverhältnis in Abhängigkeit von der Bewegungsrichtung auf dem Fahrweg geändert wird.

5. Verfahren zum Ansteuern eines Motorantriebs einer ELV nach einem der Ansprüche 1 - 4, **dadurch gekennzeichnet, dass** ein Parameter ein während der Bewegung des Getriebes zu erzielendes Drehmoment ist, so dass das Tastverhältnis in Abhängigkeit von einem zu erzielenden Drehmoment geändert wird.

6. Verfahren zum Ansteuern eines Motorantriebs einer ELV nach Anspruch 5, **dadurch gekennzeichnet, dass** das Tastverhältnis zu Beginn des Entriegelns auf ein maximales Tastverhältnis eingestellt wird.

7. Verfahren zum Ansteuern eines Motorantriebs einer ELV nach Anspruch 6, **dadurch gekennzeichnet, dass** ein maximales Tastverhältnis von 100% eingestellt wird.

8. Verfahren zum Ansteuern eines Motorantriebs einer ELV nach einem der Ansprüche 1 - 7, dass die vorgegebene Frequenz der Impulsfolge zwischen 0,1 kHz und 100 kHz, vorzugsweise zwischen 4 kHz und 20 kHz, liegt

9. Verfahren zum Ansteuern eines Motorantriebs einer ELV nach einem der Ansprüche 1 - 8, **dadurch gekennzeichnet, dass** die Folge von Impulsen von einer Steuerschaltung erzeugt wird.

10. Verfahren zum Ansteuern eines Motorantriebs einer ELV nach Anspruch 9, **dadurch gekennzeichnet, dass** das Tastverhältnis in Abhängigkeit von einer von der Steuerschaltung erfassten Betriebsspannung eingestellt wird.

11. Verfahren zum Ansteuern eines Motorantriebs einer ELV nach Anspruch 9 oder 10 , **dadurch gekennzeichnet, dass** das Tastverhältnis in Abhängigkeit von einem eine Temperatur der ELV anzeigenden, in der Steuerschaltung gespeicherten Wert eingestellt wird.

12. Ansteuerschaltung für einen Motorantrieb einer Elektronischen Lenkungsverriegelung (ELV), aufweisend:
wenigstens ein Leistungsschaltbauelement (4A - 4D), das zwischen einer Spannungsversorgung (2, 3) und einem Antriebsmotor (1) eingekoppelt ist, wobei ein Einschalten des Leistungsschaltbauelements (4A - 4D) zu einem Stromfluss durch den Antriebsmotor (1) führt, und
einen Controller (6) mit wenigstens einem Steuerausgang (5A - 5D), der das Leistungsschaltbauelement (4A - 4D) mit einer Folge von Impulsen mit einer vorgegebenen Frequenz und mit einem vorgegebenen Tastverhältnis ansteuert,
wobei wenigstens ein Eingang (7) des Controllers (69 mit wenigstens einem Sensor zum Erfassen einer Position eines bewegten Bauteils eines Getriebes der ELV gekoppelt ist, und
wobei der Controller (6) das Tastverhältnis in Abhängigkeit von wenigstens einem Parameter des Bewegungsablaufs der mit dem Antriebsmotor (1) angetriebenen Bewegung des Getriebes ändert.

13. Ansteuerschaltung für einen Motorantrieb einer ELV nach Anspruch 12, **dadurch gekennzeichnet, dass** ein Parameter die von dem Sensor erfasste Position des Getriebes auf dem Fahrweg zwischen einer Verriegelungsstellung und einer Entriegelungsstellung ist.

14. Ansteuerschaltung für einen Motorantrieb einer ELV nach Anspruch 13, **dadurch gekennzeichnet, dass** der Controller (6) das Tastverhältnis in Abhängigkeit von der Bewegungsrichtung auf dem Fahrweg ändert.

15. Ansteuerschaltung für einen Motorantrieb einer ELV nach einem der Ansprüche 12 - 14, **dadurch gekennzeichnet, dass** ein Parameter ein während der Bewegung des Getriebes zu erzielendes Drehmoment ist, so dass der Controller (6) das Tastverhältnis in Abhängigkeit von einem zu erzielenden Drehmoment ändert.

## Claims

1. Method for driving a motor drive of an electronic steering lock (ESL), in which a drive motor (1) is coupled via at least one power switching element (4A-4D) to a voltage supply (2, 3) in such a way that energising the power switching element causes a current to flow through the drive motor,
wherein the power switching element (4A-4D) is driven by means of a train of pulses having a predefined frequency and having a predefined pulse-duty factor,
wherein the pulse-duty factor is modified according to at least one parameter of the movement sequence of the movement, driven by means of the drive motor, of a transmission of the ESL.

2. Method for driving a motor drive of an ESL according to claim 1, **characterised in that** one parameter is the position of a moved transmission component.

3. Method for driving a motor drive of an ESL according to claim 2, **characterised in that** the pulse-duty factor is modified according to the position of the transmission on the travel path between a locking position and an unlocking position.

4. Method for driving a motor drive of an ESL according to claim 3, **characterised in that** the pulse-duty factor is modified according to the direction of movement on the travel path.

5. Method for driving a motor drive of an ESL according to any of claims 1 to 4, **characterised in that** one parameter is a torque to be achieved as the transmission moves, meaning that the pulse-duty factor is modified according to a torque to be achieved.

6. Method for driving a motor drive of an ESL according to claim 5, **characterised in that** the pulse-duty factor is set to a maximum pulse-duty factor at the commencement of unlocking.

7. Method for driving a motor drive of an ESL according to claim 6, **characterised in that** 100 % is set as the maximum pulse-duty factor.

8. Method for driving a motor drive of an ESL according to any of claims 1 to 7, **characterised in that** the predefined frequency of the pulse train is between 0.1 kHz and 100 kHz, preferably between 4 kHz and 20 kHz.

9. Method for driving a motor drive of an ESL according to any of claims 1 to 8, **characterised in that** the pulse train is generated by a control circuit.

10. Method for driving a motor drive of an ESL according to claim 9, **characterised in that** the pulse-duty factor is set according to an operating voltage detected by the control circuit.

11. Method for driving a motor drive of an ESL according to either claim 9 or claim 10, **characterised in that** the pulse-duty factor is set according to a value which indicates a temperature of the ESL and is stored in the control circuit.

12. Driving circuit for a motor drive of an electronic steering lock (ESL), comprising:
at least one power switching element (4A-4D) which is coupled in between a voltage supply (2, 3) and a drive motor (1), wherein energising the power switching element (4A-4D) causes a current to flow through the drive motor (1), and
a controller (6) having at least one control output (5A-5D) which drives the power switching element (4A-4D) by means of a train of pulses having a predefined frequency and having a predefined pulse-duty factor,
wherein at least one input (7) of the controller (6) is coupled to at least one sensor for detecting a position of a moved component of a transmission of the ESL, and
wherein the controller (6) modifies the pulse-duty factor according to at least one parameter of the movement sequence of the movement, driven by means of the drive motor (1), of the transmission.

13. Driving circuit for a motor drive of an ESL according to claim 12, **characterised in that** one parameter is the position, detected by the sensor, of the transmission on the travel path between a locking position and an unlocking position.

14. Driving circuit for a motor drive of an ESL according to claim 13, **characterised in that** the controller (6) modifies the pulse-duty factor according to the direction of movement on the travel path.

15. Driving circuit for a motor drive of an ESL according to any of claims 12 to 14, **characterised in that** one parameter is a torque to be achieved as the transmission moves, meaning that the controller (6) modifies the pulse-duty factor according to a torque to be achieved.

## Revendications

1. Procédé de commande d'un entraînement motorisé d'un verrouillage de direction électronique (ELV), dans lequel un moteur d'entraînement (1) est couplé à une source de tension (2, 3) via au moins un composant sectionneur de puissance (4A-4D) de sorte qu'une connexion du composant sectionneur de puissance mène à un flux de courant à travers le moteur d'entraînement,
dans lequel le composant sectionneur de puissance (4A, 4D) est commandé par une suite d'impulsions de fréquence prédéterminée et de facteur d'utilisation prédéterminé,
dans lequel le facteur d'utilisation est modifié en fonction d'au moins un paramètre du déroulement du déplacement d'une transmission de l'ELV entraîné par le moteur d'entraînement.

2. Procédé de commande d'un entraînement motorisé d'un ELV selon la revendication 1, **caractérisé en ce qu'**un paramètre est la position d'un composant de transmission déplacé.

3. Procédé de commande d'un entraînement motorisé d'un ELV selon la revendication 2, **caractérisé en ce que** le facteur d'utilisation est modifié en fonction de la position de la transmission sur le trajet compris entre une position de verrouillage et une position de déverrouillage.

4. Procédé de commande d'un entraînement motorisé d'un ELV selon la revendication 3, **caractérisé en ce que** le facteur d'utilisation est modifié en fonction du sens de déplacement sur le trajet.

5. Procédé de commande d'un entraînement motorisé d'un ELV selon l'une quelconque des revendications 1 à 4, **caractérisé en ce qu'**un paramètre est un couple de torsion à atteindre au cours du déplacement de la transmission de sorte que le facteur d'utilisation soit modifié en fonction d'un couple de torsion à atteindre.

6. Procédé de commande d'un entraînement motorisé d'un ELV selon la revendication 5, **caractérisé en ce que** le facteur d'utilisation au début du déverrouillage est réglé à un facteur d'utilisation maximal.

7. Procédé de commande d'un entraînement motorisé d'un ELV selon la revendication 6, **caractérisé en ce qu'**un facteur d'utilisation maximal de 100 % est réglé.

8. Procédé de commande d'un entraînement motorisé d'un ELV selon l'une quelconque des revendications 1 à 7, **caractérisé en ce que** la fréquence prédéterminée de la suite d'impulsions se situe entre 0,1 kHz et 100 kHz, de préférence entre 4 kHz et 20 kHz.

9. Procédé de commande d'un entraînement motorisé d'un ELV selon l'une quelconque des revendications 1 à 8, **caractérisé en ce que** la suite d'impulsions est produite par un circuit de commande.

10. Procédé de commande d'un entraînement motorisé d'un ELV selon la revendication 9, **caractérisé en ce que** le facteur d'utilisation est réglé en fonction d'une tension d'exploitation enregistrée par le circuit de commande.

11. Procédé de commande d'un entraînement motorisé d'un ELV selon la revendication 9 ou la revendication 10, **caractérisé en ce que** le facteur d'utilisation est réglé en fonction d'une valeur mémorisée dans le circuit de commande et affichant une température de l'ELV.

12. Circuit de commande pour un entraînement motorisé d'un verrouillage de direction électronique (ELV), présentant :
au moins un composant sectionneur de puissance (4A, 4D), qui est couplé entre une source de tension (2, 3) et un moteur d'entraînement (1), dans lequel une connexion du composant sectionneur de puissance (4A, 4D) mène à un flux de courant à travers le moteur (1), et
un dispositif de commande (6) avec au moins une sortie de commande (5A, 5D), qui commande l'élément sectionneur de puissance (4A, 4D) avec une suite d'impulsions d'une séquence prédéterminée et d'un facteur d'utilisation prédéterminé,
dans lequel au moins une entrée (7) du dispositif de commande (69) est couplée à au moins un capteur pour enregistrer une position d'un composant déplacé d'une transmission de l'ELV, et
dans lequel le dispositif de commande (6) modifie le facteur d'utilisation en fonction d'au moins un paramètre du déroulement du déplacement de la transmission entraîné par le moteur d'entraînement (1).

13. Circuit de commande pour un entraînement motorisé d'un ELV selon la revendication 12, **caractérisé en ce qu'**un paramètre est la position de la transmission enregistrée par le capteur sur le trajet compris entre une position de verrouillage et une position de déverrouillage.

14. Circuit de commande pour un entraînement motorisé d'un ELV selon la revendication 13, **caractérisé en ce que** le dispositif de commande (6) modifie le facteur d'utilisation en fonction du sens de déplacement sur le trajet.

15. Circuit de commande pour un entraînement motorisé d'un ELV selon l'une quelconque des revendications 12 à 14, **caractérisé en ce qu'**un paramètre est un couple de torsion à atteindre au cours du déplacement de la transmission de sorte que le dispositif de commande (6) modifie le facteur d'utilisation en fonction d'un couple de torsion à atteindre.
